# EUROPÄISCHE PATENTSCHRIFT

(11) **EP 3 194 938 B1**
(45) Veröffentlichungstag und Bekanntmachung des Hinweises auf die Patenterteilung: **20.05.2026**
(21) Anmeldenummer: 15766440.0
(22) Anmeldetag: 15.09.2015
(51) Int. Cl.: G01N 21/88, G01N 21/64, G01N 21/91, F21V 1/00, F21L 4/00

(54) **LEUCHTE UND VERFAHREN ZUM BETRIEB EINER LEUCHTE**
LIGHT AND METHOD FOR OPERATING A LIGHT
DISPOSITIF D'ÉCLAIRAGE ET PROCÉDÉ PERMETTANT DE FAIRE FONCTIONNER UN ÉCLAIRAGE

(30) Priorität: 15.09.2014 DE 102014013781; 15.09.2014 DE 202014007579 U
(43) Veröffentlichungstag der Anmeldung: 26.07.2017
(73) Patentinhaber: Breit, Marc, 66271 Kleinblittersdorf (DE)
(72) Erfinder: Breit, Marc, 66271 Kleinblittersdorf (DE)
(74) Vertreter: Patentanwälte Bernhardt / Wolff Partnerschaft mbB
(86) Internationale Anmeldenummer: PCT/EP2015/071140
(87) Internationale Veröffentlichungsnummer: WO 2016/041994

(56) Entgegenhaltungen:
- EP-A1- 1 623 213
- DE-A1- 10 326 369
- DE-A1- 102004 043 295
- DE-A1- 102006 004 995
- US-A- 6 132 072
- US-A1- 2005 083 687
- US-A1- 2007 081 210
- US-A1- 2014 111 981
- US-A1- 2014 225 514
- US-B2- 8 616 722

## Beschreibung

Die Erfindung betrifft eine Leuchte, insbesondere zur Prüfung von Werkstückoberflächen, die zumindest ein Bedienelement und zumindest zwei Leuchtmittel aufweist, die elektromagnetische Strahlung unterschiedlicher Wellenlängenbereiche emittieren, wobei für zumindest eines der Leuchtmittel eine Intensität, mit der das Leuchtmittel strahlt, automatisch verstellbar ist, wobei eine Geschwindigkeit, mit der die Intensität geändert wird, zwischen 5 Lux/s und 500 Lux/s beträgt.

Die Erfindung betrifft ferner ein Verfahren zum Betrieb einer Leuchte, insbesondere zur Prüfung von Werkstückoberflächen, ggf. unter Benutzung eines fluoreszierenden Markierungsmittels.

Aus US 2014/0111981 A1 ist eine Leuchte mit drei LED-Gruppen bekannt, die Licht unterschiedliche Farben emittieren. Die Leuchtintensität der einzelnen LED-Gruppen kann jeweils über einen von drei Farbschaltern gesteuert werden, wobei die Funktionsweise der drei Farbschalter mittels einer Rasteinrichtung von einer selbstrückstellenden Schalterfunktion in eine rastende Schalterfunktion umgeschaltet werden kann.

Die US 2014/0225 514 A1 beschreibt eine Vorrichtung zur Festkörperlichtemission, die mehrere LED-Komponenten umfasst, die getrennt voneinander steuerbar sind. Um eine spektrale Ausgabe mit unterschiedlichen Verhältnissen von skotopischem und photopischem Licht zu erzeugen. Die Vorrichtung lässt sich derart steuern, dass ein Übergang zwischen verschiedenen Betriebsmodi mehrerer LED-Komponenten möglich wird.

Die DE 10 2006 004 995 A1 beschreibt eine Leuchte für zahnärztliche oder chirurgische Verwendung, die einen mehrere LEDs oder eine multi-LED umfassenden Lichtmischer und eine Nachfolgeoptik aufweist. Um eine gewünschte Farbe einstellen zu können, lässt sich die Intensität der LEDs einzeln oder in Gruppen mittels eines Reglers steuern.

In der DE 103 26 369 A1 ist ein Transilluminator zur quantitativen oder halbquantitativen Auswertung von Materialproben beschrieben. Der Transilluminator weist eine manuelle Steuerung auf, mit der sich die Intensität verschiedener Leuchtmittel, die unterschiedliche Wellenlängen ausstrahlen, steuern lässt.

Aus der DE 10 2004 043 295 B4, der EP 1 623 213 B1 und der US 8,616,722 B2 sind Leuchten der eingangs genannten Art bekannt, die Weißlicht und ultraviolette Strahlung emittierende LEDs aufweisen. Sie werden zur visuellen Inspektionen von Werkstückoberflächen, insbesondere zur Detektion von Verunreinigungen, zur Eindringprüfung sowie zur fluoreszierenden Magnetpulverprüfung benutzt.

In der US 2005/0083687 A1 wird eine Prüfleuchte beschreiben, die LED-Gruppen aufweist, die ultraviolette Strahlung und Strahlung bei einer sichtbaren Wellenlänge emittieren, die dazu geeignet ist, fluoreszierende Materialien sichtbar zu machen. Dabei ist den einzelnen LED-Gruppen zur Verstellung der Strahlungsintensität jeweils ein Taster zugewiesen.

Bei der visuellen Inspektion, insbesondere bei Prüfung von Werkstückoberflächen nach dem fluoreszierenden Eindringverfahren, werden durch ein fluoreszierendes Mittel Defekte auf Werkstückoberflächen durch Anregung mit Ultraviolettstrahlung sichtbar gemacht. Die Inspektion wird meist im Dunkeln, bei weniger als 20 Lux Umgebungsbeleuchtungsstärke durchgeführt, weil der Mensch beim mesoptischen Sehen (Dämmerungssehen) und skotopischen Sehen (Nachtsehen) höhere Kontrastempfindlichkeit in der visuellen Wahrnehmung hat und bei hohem Kontrast zwischen der zu untersuchende Oberfläche und den angeregten Fluoreszenzen besser geprüft werden kann. Problematisch ist, dass bei Durchführung der Prüfverfahren mittels der bekannten Leuchten beim Umstellen zwischen Beleuchtung mit Weißlicht, das genutzt wird, um am Werkstück unter der Ultraviolettstrahlung aufgefundene Defekte zu inspizieren und zu beurteilen, und Beleuchtung mit Ultraviolettstrahlung eine verhältnismäßig große Änderung der Helligkeit auftritt, auf die sich die Augen einstellen müssen. Da mit der Prüfung oftmals ein häufiges Umstellen einhergeht, werden die Augen verhältnismäßig stark belastet.

Der Erfindung liegt die Aufgabe zugrunde, eine Leuchte der eingangs genannten Art zu schaffen, mit der sich die Prüfung der Werkstückoberflächen besser durchführen lässt.

Eine diese Aufgabe lösende Leuchte, wie in Anspruch 1 definiert, ist dadurch gekennzeichnet dass, sie dazu eingerichtet ist, die Intensität, mit der das andere Leuchtmittel strahlt, gleichzeitig zur Strahlungsintensitätsvergrößerung oder -verringerung des einen Leuchtmittels
a) konstant zu halten, wobei die Leuchte zumindest zwei Bedienelemente aufweist und eines der Bedienelemente dazu eingerichtet ist, die Strahlungsintensität des anderen Leuchtmittels ausgelöst durch Betätigung des einen Bedienelements automatisch zu vergrößern und durch erneute Betätigung zu verringern, und die Leuchte eingerichtet ist derart, dass die Intensität, mit der das eine Leuchtmittel strahlt, mit der Geschwindigkeit während einer Betätigung des anderen Bedienelements vergrößert und bei Freigabe des anderen Bedienelements verringert wird, oder
b) automatisch entgegengesetzt zu verringern bzw. zu vergrößern, wobei die Leuchte eingerichtet ist derart, dass die Intensität, mit der das eine Leuchtmittel strahlt, während einer Betätigung des Bedienelements mit der Geschwindigkeit vergrößert und bei Freigabe des Bedienelements mit der Geschwindigkeit verringert wird.

Mit der Erfindung wird die Möglichkeit geschaffen, die Intensitäten, mit denen die jeweiligen Leuchtmittel strahlen, beim Umstellen von einem der Leuchtmittel auf ein anderes der Leuchtmittel oder beim Zustellen eines der Leuchtmittel zu einem anderen derart aufeinander abzustimmen, dass abrupte Intensitätsänderungen vermieden werden. Vorteilhaft können sich die Augen bei einer solchen Abstimmung besser an die Intensitätsänderung anpassen und dadurch eine bessere visuelle Wahrnehmung erreicht werden.

Plötzliche, ggf. starke Intensitätsänderungen, wie sie bei den bekannten Leuchten insbesondere bei Zu- und Abschalten des Weißlichtes, vor allem bei geringer Umgebungshelligkeit, auftreten und die für die Augen sehr unangenehm und ermüdend sind und die Augen sogar schädigen können, können vermieden werden.

Durch solche Intensitätsänderungen kann zum einen ein Leuchtmittel zu dem anderen hinzugestellt werden und zum anderen von einem Leuchtmittel auf das andere und damit von einer Bestrahlung in einem Wellenlängenbereich auf eine andere überblendet werden.

Zweckmäßigerweise ist für das zumindest eine Leuchtmittel die Intensität separat von dem anderen Leuchtmittel verstellbar.

In einer Ausführungsform der Erfindung ist eines der Leuchtmittel zur Emission sichtbaren Lichts, vorzugsweise Weißlichts, und ein anderes der Leuchtmittel zur Emission von Ultraviolettstrahlung, Infrarotstrahlung und/oder blauvioletten Lichts vorgesehen. Vorzugsweise umfasst die vom Leuchtmittel zur Emission des sichtbaren Lichts emittierte Strahlung einen Wellenlängenbereich zwischen 380 und 780 nm, diejenige des Leuchtmittels zur Emission der Ultraviolettstrahlung einen Wellenlängenbereich zwischen 200 und 400 nm, diejenige des Leuchtmittels zur Emission der Infrarotstrahlung einen Wellenlängenbereich zwischen 780 nm und 50 µm und diejenige des Leuchtmittels zur Emission des blauvioletten Lichts einen Wellenlängenbereich zwischen 380 und 490 nm.

Bei der visuellen Inspektion wird wie oben erläutert die Ultraviolettstrahlung benutzt, um mit einem fluoreszierenden Mittel Defekte oder dergleichen an einer Oberfläche eines Werkstücks aufzufinden, und unter dem Weißlicht, ggf. unter gleichzeitiger Bestrahlung mit Ultraviolettstrahlung, das Werkstück ausgerichtet und/oder unter der Ultraviolettstrahlung aufgefundene Defekte oder dergleichen inspiziert, analysiert, interpretiert und/oder beurteilt.

Zweckmäßigerweise ist die Intensität, mit der das jeweilige Leuchtmittel strahlt, über den gesamten Leistungsbereich des Leuchtmittels zwischen einer minimalen Intensität, bei der das Leuchtmittel vorzugsweise keine Strahlung emittiert, und einer maximalen Intensität, die vorzugsweise einstellbar ist und sich ggf. innerhalb gewisser Grenzen verändern lässt, steuer- und/oder regelbar.

Zweckmäßigerweise sind die Intensitäten einzelner oder sämtlicher der Leuchtmittel separat verstellbar.

In einer weiteren Ausgestaltung der Erfindung ist die Leuchte derart eingerichtet, dass die Geschwindigkeit, mit der die Intensität geändert wird, von der Intensität, mit der das Leuchtmittel strahlt, abhängig ist.

In einer besonders bevorzugten Ausführungsform der Erfindung ist die Leuchte derart vorgesehen, dass die Geschwindigkeit der Änderung der Intensität, mit denen das jeweilige Leuchtmittel strahlt, in Intensitätsbereichen, in denen mit verhältnismäßig geringer Intensität gestrahlt wird, kleiner ist als in Intensitätsbereichen, in denen mit vergleichsweise großer Intensität gestrahlt wird.

Während es vorstellbar wäre, die Geschwindigkeit der Intensitätsänderung linear in Abhängigkeit von der Zeit oder proportional zur Intensität zu ändern, wird sie vorzugsweise als eine Exponentialfunktion der Intensität geändert.

Mit den unterschiedlichen Geschwindigkeiten der Intensitätsänderung wird die Intensitätsänderung in den unterschiedlichen Helligkeitsbereichen an die Anpassungsfähigkeit des Auges angepasst und berücksichtigt, dass das Auge in unterschiedlichen Intensitätsbereichen eine unterschiedliche Empfindlichkeit für Intensitätsänderungen aufweist und im Dunkeln sensibler auf Änderungen der Intensität reagiert als im Hellen. Die Empfindlichkeit ist nicht etwa linear zur Intensität, sondern wird durch das Weber-Fechner-Gesetz oder die Stevenssche Potenzfunktion beschrieben, die beide zeigen, dass die Empfindlichkeit des Auges proportional zum Logarithmus der Intensität der Strahlung ist. Dementsprechend kann in Bereichen geringerer Strahlungsintensität die Intensität lediglich mit verhältnismäßig geringen Geschwindigkeiten geändert werden, ohne eine verhältnismäßig große Reizung der Augen hervorzurufen, während die Intensität in Bereichen größerer Strahlungsintensität schneller geändert werden kann, ohne unangenehm zu sein.

In einer Ausführungsform der Erfindung ist die Leuchte zur Verstellung der Intensität in einer derartigen Geschwindigkeit eingerichtet, dass sich das menschliche Auge während der Verstellung ohne oder mit nur geringfügiger Beeinträchtigung der visuellen Wahrnehmung, insbesondere der Sehschärfe, an eine Änderung der Intensität anpassen kann, vorzugsweise derart, dass ein unter einer der Beleuchtungsarten aufgefundener Defekt dann beim Verstellen der Leuchte von einem auf das andere Leuchtmittel im Blick behalten werden. Bei Verwendung der herkömmlichen Leuchten oftmals auftretenden Schwierigkeiten, einen unter UV-Beleuchtung aufgefundenen Defekt bei Beleuchtung mit Weißlicht wiederzufinden, bestehen nicht. Die visuelle Prüfung kann dadurch schneller und genauer durchgeführt werden als mit den bekannten Leuchten.

In einer weiteren Ausgestaltung der Erfindung ist die Leuchte zur Verstellung der Intensität eingerichtet derart, dass die Änderung der Intensität durch das menschliche Auge als gleichmäßig, insbesondere ohne Intensitätssprünge, wahrgenommen wird. Die Intensitätsänderung wird bei einer solchen Änderung nicht als unangenehm empfunden und schont die Augen.

Zweckmäßigerweise ist die Intensität zwischen 0 % und 100 % einer vorgesehenen maximalen Intensität, die vorzugsweise 20 bis 2000 Lux beträgt, verstellbar derart, dass sich das menschliche Auge während der Verstellung ohne Beeinträchtigung des Sehvermögens an eine Änderung der Intensität anpassen kann und/oder dass die Änderung der Intensität durch das menschliche Auge als gleichmäßig wahrgenommen wird. Während es vorstellbar wäre, eine derartige Verstellbarkeit nur abschnittsweise für bestimmte Intensitätsbereiche vorzusehen, ist sie bevorzugt über den gesamten Intensitätsbereich vorgesehen, um ein angenehmes Arbeiten mit der Leuchte zu ermöglichen.

Die maximale Intensität ist zweckmäßigerweise, vorzugsweise separat für jede der Leuchten, einstellbar, damit die Leuchte sich an individuelle Bedürfnisse anpassen lässt.

Gemäß der Erfindung beträgt die durchschnittliche Geschwindigkeit der Änderung der Intensität des Weißlichts zwischen 5 Lux/s und 500 Lux/s.

Zweckmäßigerweise sind zur Erstellung der Intensität des Weißlichts folgende Dauern vorgesehen:
- Steigerung der Intensität von 0 auf 20 Lux / Verringerung der Intensität von 20 auf 0 Lux: Dauer > 1 - 1,5 Sekunden
- Steigerung der Intensität von 0 auf 50 Lux / Verringerung der Intensität von 50 auf 0 Lux: Dauer > 1,5 - 2,5 Sekunden
- Steigerung der Intensität von 0 auf 100 Lux / Verringerung der Intensität von 100 auf 0 Lux: Dauer > 2 - 3 Sekunden
- Steigerung der Intensität von 0 auf eine Intensität > 100 Lux / Verringerung der Intensität von einer Intensität > 100 Lux auf 0 Lux: Dauer > 2,5 Sekunden

In den genannten Geschwindigkeitsbereichen kann ausreichend schnell mit der Leuchte gearbeitet werden; eine übermäßige Ermüdung der Augen allerdings wird vermieden und das Sehvermögen bei Änderung der Intensität nicht beeinträchtigt und die Intensitätsänderungen werden als gleichmäßig empfunden.

Um eine Adaption des Auges an das Weißlicht beim Einstellen des Leuchtmittels für Weißlicht aus einem ausgeschalteten Zustand, in dem das Leuchtmittel nicht strahlt, möglichst angenehmen einzurichten, ist die Leuchte zweckmäßigerweise derart eingerichtet, dass sich das Leuchtmittel für Weißlicht auf Intensitäten einstellen lässt, die < als 1 %, vorzugsweise < 0,5 %, besonders bevorzugt < 0,1 %, einer maximalen für das Weißlicht vorgesehenen Intensität sind.

In einer besonders bevorzugten Ausführungsform der Erfindung lässt sich das Leuchtmittel für Weißlicht vom ausgeschalteten Zustand in Schritten verstellen, die < 1 Lux, vorzugsweise < 0,5 Lux, sind.

Die Leuchte kann derart eingerichtet sein, dass sie von den beiden letztgenannten Einstellmöglichkeiten, d.h. der prozentualen Abhängigkeit von der maximalen Intensität und den Schritten in 1 bzw. 05 Lux, diejenige wählt, bei **der** kleinere Schritte durchgeführt werden.

Vorzugsweise ist die Leuchte derart eingerichtet, dass die Geschwindigkeit bzw. die Geschwindigkeiten der Intensitätsänderung, vorzugsweise innerhalb gewisser Grenzen, veränderbar ist bzw. sind, um sie individuell anpassen zu können.

Zweckmäßigerweise ist zumindest eines der Leuchtmittel durch eine Entladungslampe oder/und durch zumindest eine lichtemittierende Halbleiter-Diode (LED) gebildet, wobei das/die Leuchtmittel vorzugsweise mit einem Filter zum Einstellen des jeweiligen Wellenlängenbereichs versehen ist.

Zweckmäßigerweise weist die Leuchte eine Steuer- und/oder Regelungseinheit zur Verstellung der Intensitäten auf. Die Steuer- und/oder Regelungseinheit umfasst vorzugsweise zumindest eine Konstantstromsteuerung, die auf Basis von elektrischen und elektronischen Schalt- und Regelkreisen funktioniert. Die Leuchten, insbesondere die LEDs, können dadurch besonders effizient betrieben werden, weil mittels der Konstantstromsteuerung der Betriebsstrom des jeweiligen Leuchtmittels, insbesondere der LED oder des LED-Schaltkreises, gemessen und diesen in engen Grenzen konstant gehalten werden kann. Zweckmäßigerweise kann die Konstantstromsteuerung den Konstantstrom aus einer Wechsel- und/oder Gleichspannung erzeugen.

Die Intensität der LED wird vorzugsweise unter Verwendung von Pulsweitenmodulation geändert. Die Leuchte weist dazu bevorzugt eine Pulsweitenmodulationssteuerung auf.

Ferner kann die Steuer- und/oder Regelungseinrichtung eine Regelung aufweisen, die die Leistung der Leuchte oder einzelner Teile der Leuchte temperaturabhängig reduzieren oder abschalten kann, um die Leuchte, insbesondere die Leuchtmittel und/oder die Steuer- und/oder Regelungseinheit, vor Überhitzung zu schützen. Zur Kühlung könnte die Leuchte ergänzend oder alternativ dazu mit einem Lüfter versehen sein, der vorzugsweise mittels der Steuer- und/oder Regelungseinrichtung steuer- und/oder regelbar ist.

Die Leuchte ist zweckmäßigerweise eingerichtet derart, dass die Intensität des Weißlicht emittierenden Leuchtmittels während einer Betätigung des Bedienelements vergrößert und bei Freigabe des Bedienelements verringert wird.

Alternativ könnte vorgesehen sein, dass die Intensität des Leuchtmittels für Weißlicht ausgelöst durch Betätigung des Bedienelements automatisch bis zu der vorgesehenen maximalen Intensität vergrößert wird und nach Erreichen der maximalen Intensität die Intensität automatisch oder durch erneutes Betätigen des Bedienelements wieder verringert wird, vorzugsweise bis zu einem vorgesehenen Minimalwert, bei dem bevorzugt keine Strahlung emittiert wird.

Zweckmäßigerweise ist die Leuchte zur Anzeige eines Betriebszustands zumindest eines der Leuchtmittel eingerichtet. Der Betriebszustand umfasst vorzugsweise die Intensität, mit der das Leuchtmittel die Strahlung emittiert, und/oder eine Dauer, während der das Leuchtmittel, vorzugsweise mit einer vorbestimmten Intensität, Strahlung emittiert. Die Anzeige der Dauer dient insbesondere dazu, dass bei der genannten Prüfung der Werkstückoberflächen vorgegebene Zeiträume, die für eine Adaption des Auges an bestimmte Intensitäten vorgesehen sind, eingehalten werden.

Alternativ oder ergänzend dazu kann vorgesehen sein, dass die Leuchte anzeigt, ob das jeweilige Leuchtmittel Strahlung emittiert oder nicht, d.h. insbesondere ob es an- oder ausgeschaltet ist, und seit welcher Dauer es sich im jeweiligen Betriebszustand befindet. Vorteilhaft kann angezeigt werden, ob nach Erreichen des jeweiligen Betriebszustands ausreichend Zeit vergangen ist, damit sich die Augen an die jeweilige Intensität adaptieren können. Vorzugsweise sind in der Leuchte die für die jeweiligen Betriebszustände vorgesehenen Normwerte für Augenadaptionsdauern vorgesehen.

In einer Ausgestaltung der Erfindung wird die erfindungsgemäße Leuchte verwendet wie folgt. Zunächst wird, bevorzugt im Dunkeln oder bei sehr geringer Umgebungshelligkeit, das UV-Strahlung emittierende Leuchtmittel eingeschaltet. Die Intensität der emittierten Strahlung wird dabei vorzugsweise mit einer der oben erläuterten Geschwindigkeiten der Intensitätsänderung, auf eine vorbestimmte Zielintensität gesteigert. Sie kann aber auch abrupt auf die Zielintensität eingestellt werden, da plötzliche Änderungen von aus der UV-Strahlung resultierender Beleuchtung für das Auge weniger unangenehmen sind. Eine Werkstückoberfläche kann dann unter UV-Strahlung untersucht werden. Um die Werkstückoberfläche auch unter sichtbarem Licht zu inspizieren, wird das zur Emission von Weißlicht vorgesehene Leuchtmittel angestellt und die Intensität, vorzugsweise mit einer der oben erläuterten Geschwindigkeiten, auf eine vorbestimmte Zielintensität gesteigert. Optional kann das UV-Leuchtmittel bei Erreichen einer bestimmten Intensität des Weißlichtleuchtmittels oder während der Steigerung der Intensität ausgestellt werden oder die Intensität, vorzugsweise mit einer der oben erläuterten Geschwindigkeiten, verringert werden. Zweckmäßigerweise wird zu einer weiteren Untersuchung unter UV-Strahlung anschließend das UV-Leuchtmittel wieder angestellt und die Intensität der Strahlung des UV-Leuchtmittels, vorzugsweise mit einer der oben erläuterten Geschwindigkeiten, vergrößert. Nachträglich oder gleichzeitig wird die Intensität der Weißlichtleuchte, vorzugsweise wie oben beschrieben, wieder auf eine vorbestimmte Zielintensität, bei der die Werkstückoberfläche mit sichtbarem Licht inspiziert werden soll, gesteigert.

Es versteht sich, dass die Leuchte dazu eingerichtet ist, die oben beschriebenen Änderungen der Intensitäten der jeweiligen Leuchtmittel, ggf. auf einen durch ein Bedienelement eingegebenen Befehl hin, automatisch durchzuführen.

In einer Ausgestaltung der Erfindung weist die Leuchte eine Überwachungseinrichtung auf, die zur Erkennung eines Betriebsfehlers, insbesondere einen Defekt eines der Leuchtmittel oder anderer Komponenten der Leuchte eingerichtet ist und vorzugsweise dazu vorgesehen ist, die Leuchte bei Auffinden eines Betriebsfehlers außer Betrieb zu setzen. Die Überwachungseinrichtung kann ferner zur Anzeige des Betriebsfehlers eingerichtet sein.

In einer weiteren Ausführungsform der Erfindung umfasst die Leuchte eine Justiereinrichtung, die dazu vorgesehen ist, eine Leistung der durch das jeweilige Leuchtmittel emittierte Strahlung in Abhängigkeit von einer Temperatur der Vorrichtung zu regeln. Vorteilhaft kann dadurch eine bei steigender Temperatur auftretende Reduzierung der Intensität ausgeglichen werden.

Zweckmäßigerweise ist eine Größe eines Bereichs, der mittels der Leuchte bestrahlbar ist, verstellbar. Vorzugsweise ist eine erste Einstellung, in der ein verhältnismäßig kleiner Bereich bestrahlbar ist und der einer fokussierten Betrachtung dient, und eine weitere Einstellung vorgesehen, mit der ein größerer Bereich bestrahlt werden kann.

Die Leuchte umfasst zweckmäßigerweise zumindest ein Gehäuse, das vorzugsweise zur Aufnahme der Leuchtmittel vorgesehen ist, zumindest ein Bedienelement, zumindest ein optisches System, das vorzugsweise zumindest eine Linse umfasst, und/oder zumindest ein Kühlmittel, vorzugsweise einen Lüfter, einen Wärmetauscher und/oder eine Kühlplatte.

In einer Ausgestaltung der Erfindung ist die Leuchte in einem mobilen und/oder stationären Einsatz nutzbar. Sie kann eine Hand- und/oder eine Standleuchte oder eine, beispielsweise an einer Halterung oder einer Wand fest installierbare Leuchte sein.

Während in einer besonders bevorzugten Ausführungsform der Erfindung eine Einrichtung zur Bedienung der Leuchte in das Gehäuse integriert ist, wäre auch vorstellbar, sie außerhalb des Gehäuses vorzusehen, wobei die Leuchte vorzugsweise zumindest ein Gehäuse für die Leuchtmittel, zumindest einen Schaltschrank oder ein Schaltgehäuse und/oder zumindest ein Bedienelement umfasst. Zweckmäßigerweise weist die Bedienungseinrichtung zumindest ein von Hand oder mit dem Fuß betätigbares Bedienelement auf, mittels die Intensität zumindest einer der Leuchtmittel veränderbar ist.

Das Bedienelement, das vorzugsweise durch einen Taster oder einen Drehregler gebildet ist, dient zweckmäßigerweise dazu, die jeweiligen Leuchtmittel ein- oder auszuschalten bzw. eine Steuerung und/oder Regelung der Intensitäten, mit denen die jeweiligen Leuchtmittel strahlen, zu veranlassen.

Die Stromversorgung der Leuchte kann durch zumindest eine externe oder integrierte Gleich- und/oder Wechselstromquelle erfolgen.

Der Begriff Leuchte soll auch ein Leuchtensystem umfassen.

Die Erfindung wird nachfolgend anhand eines Ausführungsbeispiels und der beiliegenden, sich auf das Ausführungsbeispiel beziehenden Zeichnungen näher erläutert. Es zeigen:
- Fig. 1: eine erfindungsgemäße Leuchte im seitlichen Schnitt,
- Fig. 2: eine Vorderansicht der Leuchte nach Fig. 1,
- Fig. 3: eine Rückansicht der Leuchte nach Fig. 1, und
- Fig. 4 bis 6: die Erfindung erläuternde Diagramme.

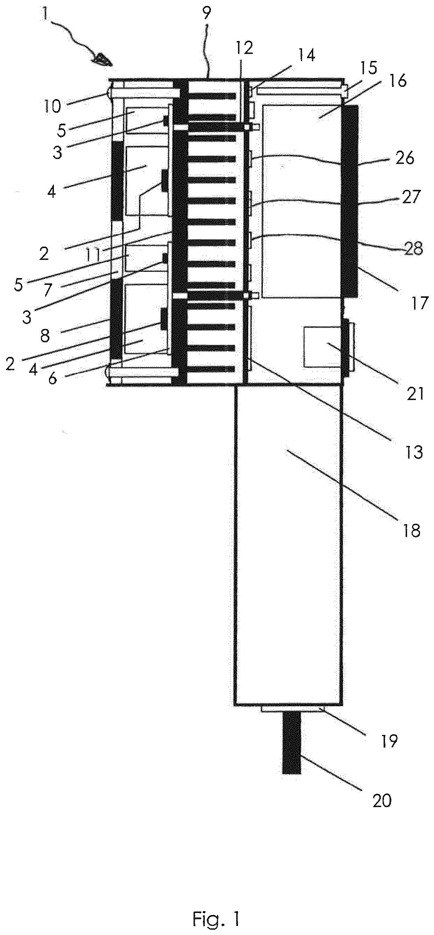

Eine in den Figuren 1 bis 3 dargestellte erfindungsgemäße Leuchte 1 weist acht UV-LEDs 2, die zur Emission von UV-Strahlung (Wellenlängenbereich 200 - 400 nm) vorgesehen sind, und acht Weißlicht-LEDs 3 auf, die zur Emission von Weißlicht (Wellenlängenbereich 380 - 780 nm), vorgesehen sind, auf. Vor den LEDs 2,3 sind zur Beeinflussung jeweiliger, von den LEDs ausgehender Strahlengänge optische Bauelemente 4,5 angeordnet. In Strahlungsrichtung gesehen hinter den optischen Bauelementen 4,5 ist eine Frontscheibe 7 angeordnet, die über Befestigungsmittel 10 mit einem Gehäuse 9 der Leuchte 1 verbunden ist und die für jede der UV-LEDs 2 mit Filtern 8 versehen ist.

Die LEDs 2,3 sind auf eine Trägerplatine 6 aufgelötet, die auf einem Kühlkörper 11 angeordnet ist. Der Kühlkörper 11 ist über Abstandbolzen 12 mit einer Leiterplatte 13 verbunden, die mehrere elektronische Bauteile trägt. Auf der Leiterplatte 13 ist ferner eine Anzeigen-LED 14 angeordnet, die wie unten näher erläutert zur Anzeige eines Betriebszustandes der Leuchte 1 vorgesehen ist. Zwischen einer Rückseite des Gehäuses 9 und der Anzeigen-LED 14 ist ein Lichtleiter 15 angeordnet, mittels dessen Strahlung von der Anzeigen-LED 14 zu der Rückseite geleitet werden kann.

Die elektronischen Bauteile bilden eine Regelungs- und/oder Steuerungseinrichtung 26, die zur Steuerung und/oder Regelung der Intensitäten, mit denen die LEDs 2,3 strahlen, eingerichtet ist.

Die elektronischen Bauteile bilden ferner eine Überwachungseinrichtung 27, die zur Erkennung von Fehlern beim Betrieb der Leuchten 1 vorgesehen ist. Die Überwachungseinrichtung 27 ist derart geschaltet, dass sie die Leuchte 1 bei Auffinden eines Betriebsfehlers, beispielsweise bei Ausfall einer der LEDs 2,3, außer Betrieb setzen kann. Ferner kann sie dazu vorgesehen sein, beispielsweise durch Anzeige eines Codes, den Betriebsfehler über die Anzeigen-LED oder eine andere Anzeigeneinrichtung zu charakterisieren.

Darüber hinaus ist auf der Leiterplatte 13 durch die elektronischen Bauteile eine Justiereinrichtung 28 gebildet, die dazu vorgesehen ist, Leistungen, mit denen die LEDs 2,3 strahlen, in Abhängigkeit einer Temperatur der Leuchte 1 zu regeln, um bei Erwärmung der Leuchte 1 auftretende Änderung der Stromstärke ausgleichen zu können, um die jeweiligen Intensitäten auf die vorgesehenen Werte zu regeln.

Zur Kühlung der Leuchte ist ein Lüfter 16 vorgesehen, mittels dessen Luft auf die Leiterplatte 13 und den Kühlkörper 11 geblasen werden kann. Das Gehäuse 9 ist auf seiner Rückseite mit einem Lüftungsgitter 17 versehen, das zur Aufnahme eines Filters vorgesehen ist und durch welches die Luft mittels des Lüfters 16 angesaugt wird.

Die Leuchte 1 weist ferner einen Haltegriff 18 auf, an dessen unteren Ende über einen Zugentlaster 19 eine Leitung 20 geführt ist, über welche die Leuchte 1 mit Energie versorgt werden und ggf. gesteuert werden kann.

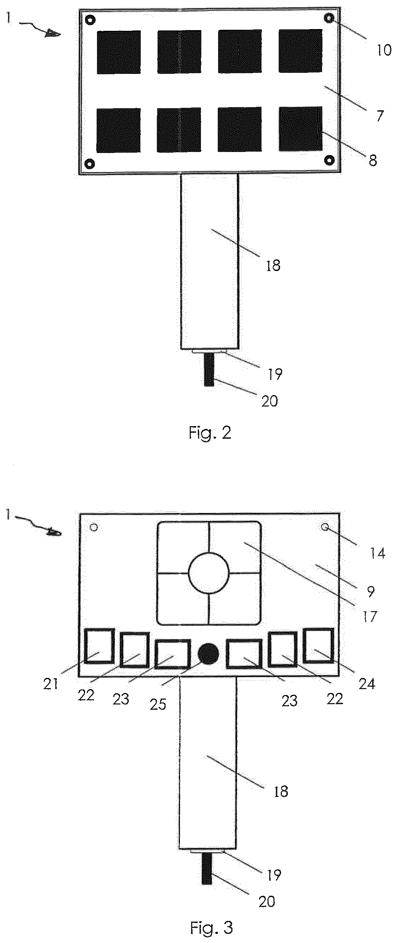

Wie insbesondere Fig. 3 zu entnehmen ist, ist die Leuchte 1 auf ihrer Rückseite mit Tastern 21,22,23,24 und einem Drehregler 25 versehen, die zur Steuerung von Intensitäten, mit denen die LEDs 2,3 leuchten, vorgesehen sind und die mit der Steuer- und/oder Regelungseinrichtung 26 zusammenwirken.

Die Steuer- und Regelungseinrichtung 26 ist dazu vorgesehen, Intensitäten, mit denen die UV-LEDs 2 und die Weißlicht-LEDs 3 strahlen, mittels Pulsweitenmodulation separat voneinander zu verändern.

Die Steuer- und Regelungseinrichtung 26 ändert die Intensitäten mit einer derartigen Geschwindigkeit, dass sich das menschliche Auge ohne oder mit nur geringfügiger Beeinträchtigung der visuellen Wahrnehmung, insbesondere der Sehschärfe, an die sich ändernde Intensität anpassen kann, sodass ein aufgefundener Defekt bei der Änderung der Intensität im Blick behalten werden kann. Ferner werden die Intensitäten derart geändert, dass das menschliche Auge die Intensitätsänderung gleichmäßig, d.h. ohne Intensitätssprünge, wahrnimmt. Um einerseits eine möglichst wenig ermüdende Umstellung von einer Beleuchtung mit UV-Strahlung auf eine Beleuchtung mit Weißlicht zu ermöglichen und andererseits die Umstellung der letztgenannten Voraussetzung möglichst schnell durchzuführen, ist die Steuer- und Regelungseinrichtung 26 derart programmiert, dass die jeweilige Intensität entsprechend der Anpassungsfähigkeit des menschlichen Auges bei geringer Intensität verhältnismäßig langsam und bei vergleichsweise großer Intensität schneller geändert wird. Eine Geschwindigkeit, mit der die jeweilige Intensität geändert wird, kann dabei proportional oder exponentiell abhängig von der jeweiligen Intensität sein oder linear in Abhängigkeit von der Zeit geändert werden.

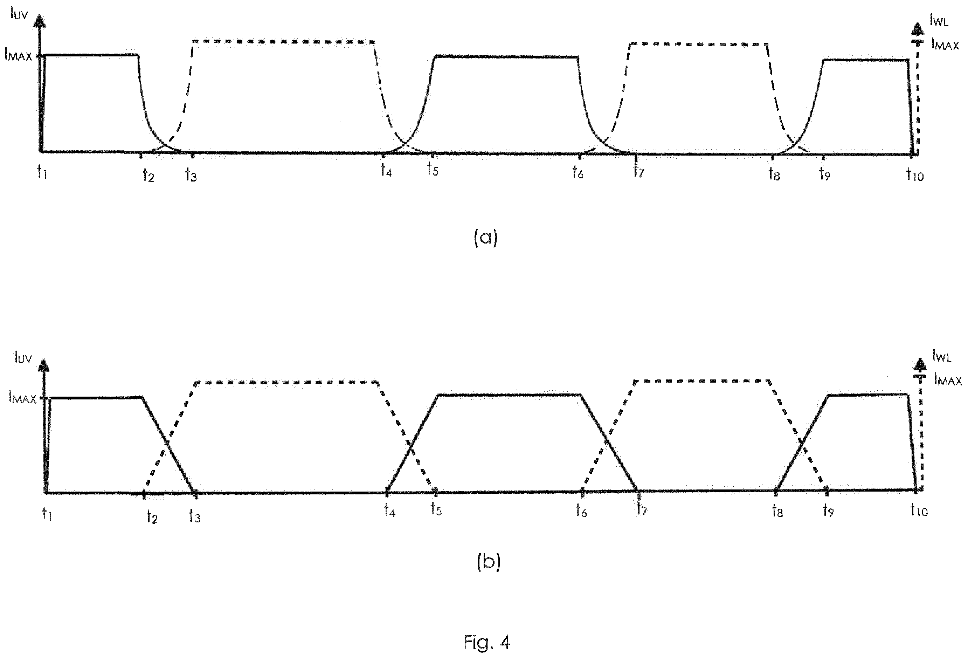

Durch Betätigung der Taster 21,22,23,24 wird die Steuer- und Regelungseinrichtung 26 dazu veranlasst, die Intensitäten der UV-LEDs und der Weißlicht-LEDs 3 zu ändern wie nachfolgend anhand der Figuren 4 bis 6 erläutert, die Diagramme zeigen, in denen der zeitliche Verlauf der Intensitäten der UV-LEDs 2 (auf der linken Seite aufgetragene Y-Achse I_{UV}) und der Weißlicht-LEDs 3 (auf der rechten Seite aufgetragene Y-Achse I_{W}), darstellen.

### 1. Beispiel (vgl. Fig. 4):

Zum Zeitpunkt t₁ wird der Taster 21 betätigt und dadurch die UV-LED 2 eingeschaltet und leuchtet mit einer Zielintensität I_{MAX}, unter der ein Werkstück untersucht werden kann.

Zum Zeitpunkt t₂ wird durch Betätigung eines der Taster 22 von Strahlung mit der UV-LED 2 auf Strahlung durch die Weißlicht-LED 3 überblendet, d.h. die Intensität, mit der die Weißlicht-LED 3 strahlt, wird wie oben erläutert auf eine Zielintensität I_{MAX} gesteigert und gleichzeitig die Intensität, mit der die UV-LED 2 strahlt, so weit reduziert, dass sie nicht mehr strahlt. Zum Zeitpunkt t₃ ist die Zielintensität I_{MAX} der Weißlicht-LED 3 erreicht und die Intensität der UV-LED auf null reduziert. Das Werkstück kann nun unter Weißlicht inspiziert werden.

Soll nun eine erneute Untersuchung auch unter UV-Beleuchtung durchgeführt werden, wird der Taster 22 wieder freigegeben und auf Beleuchtung durch die UV-LED 2 überblendet (Zeitpunkte t₄ und t₅) durch erneute Betätigung des Tasters 22 lässt sich wieder auf Weißlicht überblenden (Zeitpunkte t₆ und t₇).

Bei der erneuten Überblendung auf UV-Licht wird der Taster 22 wieder freigegeben (Zeitpunkte t₈ und t₉).

Zum Ausschalten der UV-LED 2 wird der Taster 21 erneut betätigt.

Es versteht sich, dass zur Untersuchung des Werkstücks beliebig oft zwischen der UV-LED 2 und Weißlicht-LED 3 hin und her überblendet werden kann.

Es kann vorgesehen sein, dass ein Überblenden hin zu einer Strahlung lediglich mittels Weißlicht lediglich so lange durchgeführt wird, wie einer der Taster 22 betätigt wird und bei Loslassen eines der Taster 22 umgekehrt die Intensität der Weißlicht-LED 3 wieder verringert und die diejenige der UV-LED auf die Zielintensität vergrößert wird.

Vorteilhaft kann eine Stelle auf dem Werkstück, z.B. ein Defekt, der unter Ultraviolettstrahlung oder unter Weißlicht betrachtet wird, auch beim Überblenden im Blick behalten werden. In beiden Umstellrichtungen, d.h. von Weißlicht hin zu Ultraviolettstrahlung und umgekehrt, werden die jeweiligen Intensitätsänderungen als Film wahrgenommen. Da die Intensitätsänderungen in derartigen Geschwindigkeiten vorgenommen werden, dass sich die Augen daran anpassen können, wird die visuelle Wahrnehmung, insbesondere die Sehschärfe, nicht oder nur geringfügig beeinträchtigt.

Wie in Fig. 4a dargestellt, können die Intensitäten der UV-LED 2 und der Weißlicht-LED 3 derart geändert werden, dass bei größeren Intensitäten die Intensitäten schneller geändert werden als bei geringen Intensitäten. Wie oben erläutert kann sich das menschliche Auge dann besser an die ändernden Intensitäten anpassen.

Allerdings wäre auch vorstellbar, die Intensitäten, wie in Fig. 4b gezeigt, in Abhängigkeit von der Zeit linear zu ändern.

Es versteht sich, dass die verschiedenen, Intensitäten zu ändern, auch miteinander kombiniert werden könnten. So könnte z.B. lediglich die Intensität der Weißlicht-LED 3 abhängig von der Größe der Intensität geändert werden und die Intensität der UV-LED 2 proportional zur Zeit geändert werden.

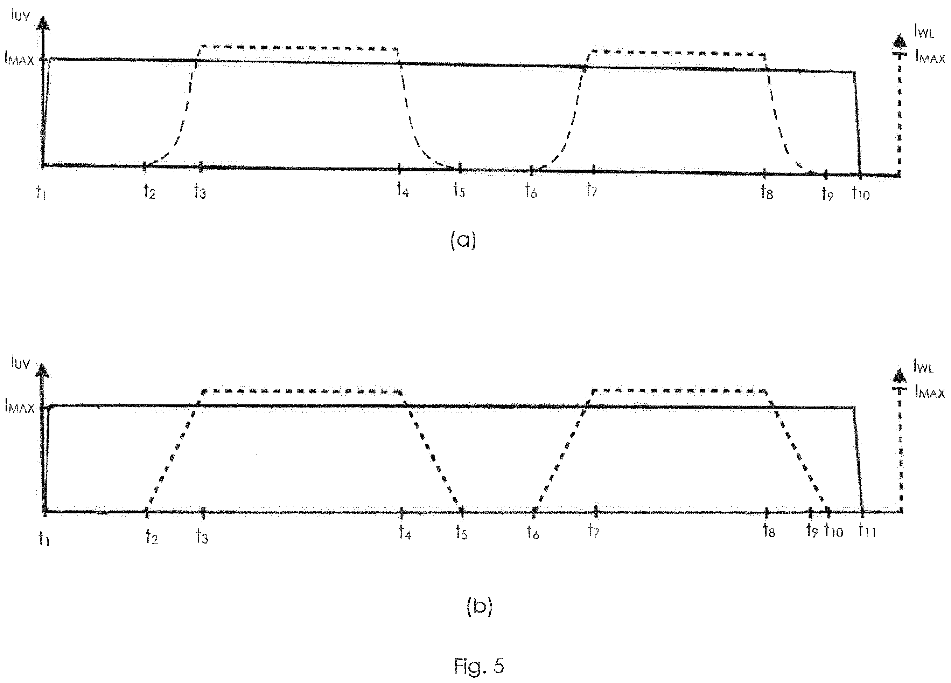

### 2. Beispiel (Figur 5)

Zu einem Zeitpunkt t₁ wird durch Betätigung des Tasters 21 die UV-LED 2 eingeschaltet und die Intensität auf die Zielintensität I_{MAX} gestellt. Durch Betätigung eines der Taster 23 (Zeitpunkt t₂) wird die Weißlicht-LED 3 zusätzlich zu der UV-LED 2 eingestellt, wobei die Intensität, mit der die Weißlicht-LEDs strahlt, wie oben erläutert nach und nach auf einen Zielwert I_{MAX} gesteigert wird bis sie diesen zu einem Zeitpunkt t₃ erreicht und die Intensität, mit der die UV-LED 2 leuchtet, konstant bleibt. In gleicher Weise wie oben erläutert erfolgt eine Steigerung der Intensität der Weißlicht-LED 3 bzw. ein Konstanthalten der Intensität auf I_{MAX} lediglich so lange, wie der Taster 23 gedrückt gehalten wird und durch Loslassen (Zeitpunkt t₄) des Tasters 23 wird veranlasst, dass die Intensität der Weißlicht-LED 3 wieder reduziert wird, bis sie ab dem Zeitpunkt t₅ nicht mehr strahlt. Anschließend lässt sich bei Bedarf die Weißlicht-LED 3 wieder zu der UV-LED 2 hinzuschalten (Zeitpunkte t₆ bis t₈ und t₁₀). Ist die Untersuchung des Werkstücks beendet, wird durch Betätigung des Tasters 21 die UV-LED ausgeschaltet (Zeitpunkte t₉ und t₁₁).

Wie oben anhand der Fig. 5 erläutert, kann die Weißlicht-LED 3 auch bei diesem Beispiel in Abhängigkeit von der jeweiligen Intensität mit unterschiedlichen Geschwindigkeiten verändert werden (Fig. 5a) oder die Intensität in linearer Abhängigkeit von der Zeit durchgeführt werden (Fig. 5b).

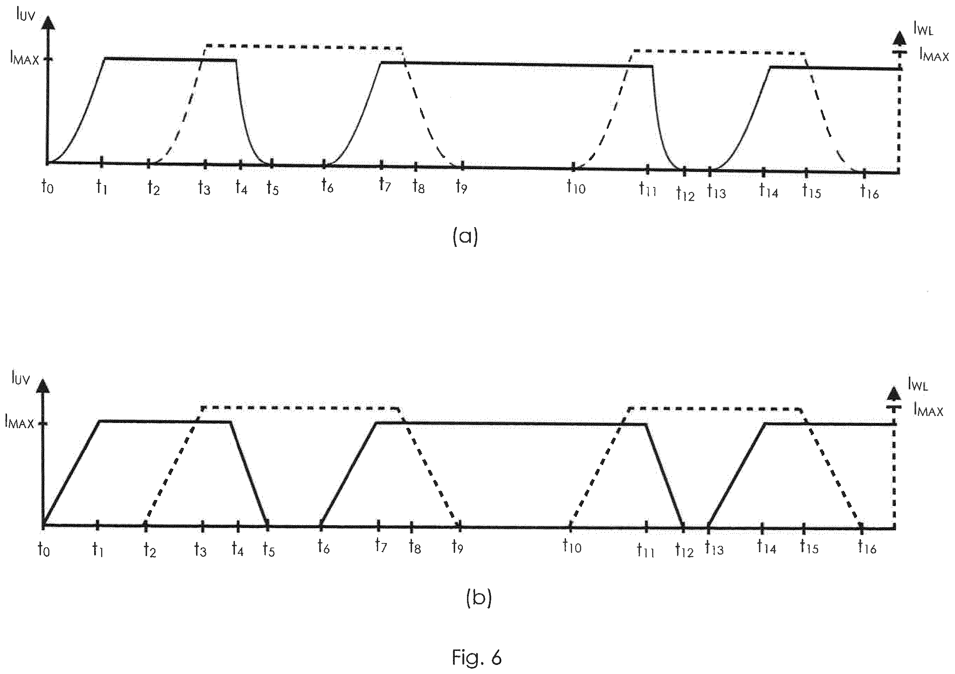

### 3. Beispiel (Figur 6)

Wie Fig. 6 zeigt, könnte die UV-LED nach Zuschalten der Weißlicht-LED 3 auch ausgeschaltet werden (Zeitpunkte t₄ und t₅) und bei Bedarf wieder zu den Weißlicht wieder hinzugeschaltet werden (Zeitpunkte t₆ und t₇) zur Betrachtung des Werkstücks unter UV-Strahlung, wird die Intensität der Weißlicht-LEDs 3 dann wieder reduziert (Zeitpunkte t₈ und t₉).

Ferner ist Fig. 6 zu entnehmen, dass auch bei Einschalten der UV-LED 2 die Intensität nach und nach auf den Zielwert I_{MAX} gesteigert werden kann, z.B. mit einer der oben beschriebenen Geschwindigkeiten.

Der Taster 24 ist dazu vorgesehen, jeweilig erreichten Intensitäten der UV-LED 2 und der Weißlicht-LED 3 zu halten, d.h. zu verhindern, dass ein mit der Leuchte 1 erreichter Beleuchtungszustand geändert wird. Beispielsweise kann durch Betätigung des Tasters 24 die Leuchte 1 im Zustand zum Zeitpunkt t₃ nach Fig. 4 a oder im Zustand nach Zeitpunkt t₃ nach Fig. 5a gehalten werden, ohne dass der Taster 22 bzw. der Taster 22 oder 23 gedrückt gehalten werden muss.

Der Drehregler 25 ist dazu vorgesehen, die Zielintensität, mit der die Weißlicht-LED 3 strahlt, in gewissen vorbestimmten Grenzen zu verändern und für die Arbeit mit der Leuchte 1 einzustellen.

## Patentansprüche

1. Leuchte, insbesondere zur Prüfung von Werkstückoberflächen, die zumindest ein Bedienelement (21,22,23,24) und zumindest zwei Leuchtmittel (2,3) aufweist, die elektromagnetische Strahlung unterschiedlicher Wellenlängenbereiche emittieren, wobei für zumindest eines der Leuchtmittel (2,3) eine Intensität, mit der das Leuchtmittel (2,3) strahlt, automatisch verstellbar ist, wobei eine Geschwindigkeit, mit der die Intensität geändert wird, zwischen 5 Lux/s und 500 Lux/s beträgt, wobei die Leuchte (1) dazu eingerichtet ist, die Intensität, mit der das andere Leuchtmittel (2,3) strahlt, gleichzeitig zur Strahlungsintensitätsvergrößerung oder -verringerung des einen Leuchtmittels (2,3)
a) konstant zu halten, wobei die Leuchte (1) zumindest zwei Bedienelemente (21,23) aufweist und eines der Bedienelemente (21) dazu eingerichtet ist, die Strahlungsintensität des anderen Leuchtmittels (2,3) ausgelöst durch Betätigung des einen Bedienelements (21) automatisch bis zu einer vorgesehenen maximalen Intensität zu vergrößern und durch erneute Betätigung zu verringern, und die Leuchte (1) eingerichtet ist derart, dass die Intensität, mit der das eine Leuchtmittel (2,3) strahlt, während einer Betätigung des anderen Bedienelements (23) mit der Geschwindigkeit vergrößert und bei Freigabe des anderen Bedienelements (23) mit der Geschwindigkeit verringert wird, oder
b) automatisch entgegengesetzt zu verringern bzw. zu vergrößern, wobei die Leuchte (1) eingerichtet ist derart, dass die Intensität, mit der das eine Leuchtmittel (2,3) strahlt, während einer Betätigung des Bedienelements (22) mit der Geschwindigkeit vergrößert und bei Freigabe des Bedienelements (22) mit der Geschwindigkeit verringert wird.

2. Leuchte nach Anspruch 1,
**dadurch gekennzeichnet,**
**dass** die Leuchte (1) derart eingerichtet, dass eine Geschwindigkeit, mit der die Intensität verstellt wird, abhängig ist von der Intensität, mit der das jeweilige Leuchtmittel (2,3) strahlt, wobei die Geschwindigkeit vorzugsweise bei vergleichsweise geringer Intensität kleiner ist als bei vergleichsweise großer Intensität.

3. Leuchte nach Anspruch 1 oder 2,
**dadurch gekennzeichnet,**
**dass** die Leuchte (1) zur Verstellung der Intensität in einer derartigen Geschwindigkeit eingerichtet ist, dass sich das menschliche Auge während der Verstellung ohne Beeinträchtigung der visuellen Wahrnehmung an eine Änderung der Intensität anpassen kann.

4. Leuchte nach einem der Ansprüche 1 bis 3,
**dadurch gekennzeichnet,**
**dass** die Leuchte (1) zur Verstellung der Intensität eingerichtet ist derart, dass die Änderung der Intensität durch das menschliche Auge als gleichmäßig, insbesondere ohne Intensitätssprünge, wahrgenommen wird.

5. Leuchte nach einem der Ansprüche 1 bis 4,
**dadurch gekennzeichnet,**
**dass** eines der Leuchtmittel (2) zur Emission sichtbaren Lichts, vorzugsweise Weißlichts, und ein anderes der Leuchtmittel (3) zur Emission ultravioletter Strahlung, Infrarotstrahlung und/oder blauvioletten Lichts vorgesehen ist.

6. Leuchte nach einem der Ansprüche 1 bis 5,
**gekennzeichnet durch** eine Steuer- und/oder Regelungseinrichtung (26) zur Verstellung der Intensitäten.

7. Leuchte nach einem der Ansprüche 1 bis 6,
**dadurch gekennzeichnet,**
**dass** die Leuchte (1) zur Anzeige eines Betriebszustands zumindest eines der Leuchtmittel (2,3) eingerichtet ist.

8. Leuchte nach einem der Ansprüche 1 bis 7,
**dadurch gekennzeichnet,**
**dass** der Betriebszustand die Intensität, mit der das Leuchtmittel (2,3) die Strahlung emittiert, und/oder eine Emissionsdauer, vorzugsweise eine Emissionsdauer bei einer vorbestimmten Intensität, umfasst.

9. Leuchte nach einem der Ansprüche 1 bis 8,
**gekennzeichnet durch** zumindest eine Bedieneinrichtung, vorzugsweise einen Hand- und/oder Fußschalter und/oder -regler (21,22,23,24,25), zur Änderung der Intensität.

10. Leuchte nach einem der Ansprüche 1 bis 9,
**gekennzeichnet durch** eine Überwachungseinrichtung, die zur Erkennung eines Betriebsfehlers, insbesondere einen Defekt eines der Leuchtmittel (2,3) oder anderer Komponenten der Leuchte (1), und vorzugsweise zur Anzeige des Betriebsfehlers eingerichtet ist und/oder dazu vorgesehen ist, die Leuchte (1) bei Auffinden eines Betriebsfehlers außer Betrieb zu setzen.

11. Verfahren zum Betrieb einer Leuchte (1), insbesondere zur Prüfung von Werkstückoberflächen, insbesondere unter Benutzung eines fluoreszierenden Markierungsmittels, die zumindest zwei Leuchtmittel (2,3) aufweist, die elektromagnetische Strahlung unterschiedlicher Wellenlängenbereiche emittieren, wobei für zumindest eines der Leuchtmittel (2,3) eine Intensität, mit der das Leuchtmittel (2,3) strahlt, mittels eines Bedienelements (21,22,23,24) verstellt wird, wobei die Geschwindigkeit, mit der die Intensität geändert wird, zwischen 5 Lux/s und 500 Lux/s beträgt, wobei die Intensität, mit der das andere Leuchtmittel (2,3) strahlt, gleichzeitig zur Strahlungsintensitätsvergrößerung oder -verringerung des einen Leuchtmittels
a) konstant gehalten wird, wobei die Leuchte (1) zumindest zwei Bedienelemente (21,23) aufweist und die Strahlungsintensität des anderen Leuchtmittels (2,3) ausgelöst durch Betätigung des einen Bedienelements (21) automatisch bis zu einer vorgesehenen maximalen Intensität vergrößert und durch erneute Betätigung verringert wird und die Intensität des einen Leuchtmittels (2,3) mit der Geschwindigkeit während einer Betätigung des anderen Bedienelements (23) mit der Geschwindigkeit vergrößert und bei Freigabe des anderen Bedienelements (23) mit der Geschwindigkeit verringert wird, oder
b) automatisch entgegengesetzt verringert bzw. vergrößert wird, wobei die Intensität des einen Leuchtmittels (2,3) während einer Betätigung des Bedienelements (22) mit der Geschwindigkeit vergrößert und bei Freigabe des Bedienelements (22) mit der Geschwindigkeit verringert wird.

12. Verfahren nach Anspruch 11,
**dadurch gekennzeichnet,**
**dass** die Intensität in einer derartigen Geschwindigkeit verstellt wird, dass sich das menschliche Auge während der Verstellung ohne Beeinträchtigung des Sehvermögens an eine Änderung der Intensität anpassen kann.

13. Verfahren nach Anspruch 11 oder 12,
**dadurch gekennzeichnet,**
**dass** die Leuchte (1) ein Bedienelement (21,22,23,24) umfasst und dass die Intensität, mit der eines der Leuchtmittel (2,3) strahlt, vorzugweise das Weißlicht emittierenden Leuchtmittels (2,3), durch Betätigung des Bedienelements (21,22,23,24) vergrößert oder verringert wird und die Intensität, mit der das andere Leuchtmittel (2,3) strahlt, gleichzeitig konstant gehalten oder umgekehrt zum jeweilig ersten Leuchtmittel (2,3) verringert bzw. vergrößert wird.

## Claims

1. Luminaire, in particular for testing workpiece surfaces, which comprises at least one operating element (21, 22, 23, 24) and at least two illuminants (2, 3) which emit electromagnetic radiation in different wavelength ranges, wherein an intensity with which the illuminant (2, 3) radiates is automatically adjustable for at least one of the illuminants (2, 3), wherein a speed at which the intensity is changed is between 5 lux/s and 500 lux/s, wherein the luminaire (1) is configured, at the same time as the increase or reduction of the radiation intensity of said one illuminant (2, 3),
a) to keep constant the intensity with which the other illuminant (2, 3) radiates, wherein the luminaire (1) comprises at least two operating elements (21, 23) and one of the operating elements (21) is configured automatically to increase the radiation intensity of the other illuminant (2, 3) up to a maximum intensity provided, in a manner triggered by actuation of said one operating element (21), and to reduce it by renewed actuation, and the luminaire (1) is configured in such a way that the intensity with which said one illuminant (2, 3) radiates is increased at the speed during an actuation of the other operating element (23) and is reduced at the speed upon release of the other operating element (23), or
b) to automatically oppositely reduce or increase the intensity with which the other illuminant (2, 3) radiates, wherein the luminaire (1) is configured in such a way that the intensity with which said one illuminant (2, 3) radiates is increased at the speed during an actuation of the operating element (22) and is reduced at the speed upon release of the operating element (22).

2. Luminaire according to Claim 1,
**characterized**
**in that** the luminaire (1) is configured in such a way that a speed at which the intensity is adjusted is dependent on the intensity with which the respective illuminant (2, 3) radiates, wherein preferably at comparatively low intensity the speed is lower than at comparatively high intensity.

3. Luminaire according to Claim 1 or 2,
**characterized**
**in that** the luminaire (1) is configured for adjusting the intensity at a speed such that the human eye can adapt to a change in the intensity during the adjustment without impairment of visual perception.

4. Luminaire according to any of Claims 1 to 3,
**characterized**
**in that** the luminaire (1) is configured for adjusting the intensity in such a way that the change in the intensity is perceived by the human eye as uniform, in particular without intensity jumps.

5. Luminaire according to any of Claims 1 to 4,
**characterized**
**in that** one of the illuminants (2) is provided for emitting visible light, preferably white light, and another of the illuminants (3) is provided for emitting ultraviolet radiation, infrared radiation and/or blue-violet light.

6. Luminaire according to any of Claims 1 to 5,
**characterized by** a control and/or regulation device (26) for adjusting the intensities.

7. Luminaire according to any of Claims 1 to 6,
**characterized**
**in that** the luminaire (1) is configured for indicating an operating state of at least one of the illuminants (2, 3).

8. Luminaire according to any of Claims 1 to 7,
**characterized**
**in that** the operating state comprises the intensity with which the illuminant (2, 3) emits the radiation, and/or an emission duration, preferably an emission duration at a predetermined intensity.

9. Luminaire according to any of Claims 1 to 8,
**characterized by** at least one operating device, preferably a hand- and/or foot-operated switch and/or regulator (21, 22, 23, 24, 25), for changing the intensity.

10. Luminaire according to any of Claims 1 to 9,
**characterized by** a monitoring device that is configured for identifying an operational fault, in particular a defect of one of the illuminants (2, 3) or of other components of the luminaire (1), and preferably for indicating the operational fault and/or is provided for deactivating the luminaire (1) upon finding an operational fault.

11. Method for operating a luminaire (1), in particular for testing workpiece surfaces, in particular using a fluorescent marking medium, said luminaire comprising at least two illuminants (2, 3) which emit electromagnetic radiation in different wavelength ranges, wherein an intensity with which the illuminant (2, 3) radiates is adjusted for at least one of the illuminants (2, 3) by means of an operating element (21, 22, 23, 24), wherein the speed at which the intensity is changed is between 5 lux/s and 500 lux/s, wherein, at the same time as the increase or reduction of the radiation intensity of said one illuminant, the intensity with which the other illuminant (2, 3) radiates
a) is kept constant, wherein the luminaire (1) comprises at least two operating elements (21, 23) and the radiation intensity of the other illuminant (2, 3) is automatically increased up to a maximum intensity provided, in a manner triggered by actuation of said one operating element (21), and is reduced by renewed actuation, and the intensity of said one illuminant (2, 3) is increased at the speed during an actuation of the other operating element (23) and is reduced at the speed upon release of the other operating element (23), or
b) is automatically oppositely reduced or increased, wherein the intensity of said one illuminant (2, 3) is increased at the speed during an actuation of the operating element (22) and is reduced at the speed upon release of the operating element (22).

12. Method according to Claim 11,
**characterized**
**in that** the intensity is adjusted at a speed such that the human eye can adapt to a change in the intensity during the adjustment without impairment of vision.

13. Method according to Claim 11 or 12,
**characterized**
**in that** the luminaire (1) comprises an operating element (21, 22, 23, 24), and in that the intensity with which one of the illuminants (2, 3) radiates, preferably the illuminant (2, 3) that emits white light, is increased or reduced by the actuation of the operating element (21, 22, 23, 24) and the intensity with which the other illuminant (2, 3) radiates is at the same time kept constant or reduced or increased oppositely to the respectively first illuminant (2, 3).

## Revendications

1. Luminaire, en particulier pour l'inspection de surfaces de pièces, comportant au moins un élément de commande (21, 22, 23, 24) et au moins deux moyens d'éclairage (2, 3) qui émettent un rayonnement électromagnétique dans différentes gammes de longueurs d'onde, sachant qu'au moins dans un premier des moyens d'éclairage (2, 3), l'intensité avec laquelle le moyen d'éclairage (2, 3) rayonne est réglable automatiquement et que la vitesse à laquelle l'intensité est modifiée est comprise entre 5 lux/s et 500 lux/s,
le luminaire (1) étant conçu de telle sorte que, simultanément à l'augmentation ou à la diminution de l'intensité de rayonnement du premier moyen d'éclairage (2, 3), l'intensité avec laquelle un deuxième moyen d'éclairage (2, 3) rayonne
a) est maintenue constante, sachant que le luminaire (1) comporte au moins deux éléments de commande (21, 23) et qu'un premier des éléments de commande (21) est conçu pour augmenter automatiquement l'intensité de rayonnement du deuxième moyen d'éclairage (2, 3) jusqu'à une intensité maximale prévue, en étant déclenché par l'actionnement du premier élément de commande (21), et pour la diminuer par un nouvel actionnement, et le luminaire (1) est conçu de telle sorte que l'intensité avec laquelle le premier moyen d'éclairage (2, 3) rayonne est augmentée à ladite vitesse pendant l'actionnement du deuxième élément de commande (23) et est diminuée à ladite vitesse lors du relâchement du deuxième élément de commande (23), ou
b) est diminuée ou augmentée automatiquement en sens inverse, sachant que le luminaire (1) est conçu de telle sorte que l'intensité avec laquelle le premier moyen d'éclairage (2, 3) rayonne est augmentée à ladite vitesse pendant l'actionnement de l'élément de commande (22) et est diminuée à ladite vitesse lors du relâchement de l'élément de commande (22).

2. Luminaire selon la revendication 1,
**caractérisé en ce que** le luminaire (1) est conçu de telle sorte que la vitesse à laquelle l'intensité est réglée dépend de l'intensité avec laquelle le moyen d'éclairage respectif (2, 3) rayonne, la vitesse étant de préférence plus faible à une intensité relativement faible qu'à une intensité relativement élevée.

3. Luminaire selon la revendication 1 ou 2,
**caractérisé en ce que** le luminaire (1) est conçu pour régler l'intensité à une vitesse telle que l'œil humain puisse s'adapter à une modification de l'intensité pendant le réglage sans que la perception visuelle soit altérée.

4. Luminaire selon l'une des revendications 1 à 3,
**caractérisé en ce que** le luminaire (1) est conçu pour régler l'intensité de telle sorte que la modification de l'intensité soit perçue par l'œil humain comme étant régulière, en particulier sans sauts d'intensité.

5. Luminaire selon l'une des revendications 1 à 4,
**caractérisé en ce qu'**un premier des moyens d'éclairage (2) est prévu pour émettre de la lumière visible, de préférence de la lumière blanche, et un deuxième des moyens d'éclairage (3) est prévu pour émettre un rayonnement ultraviolet, un rayonnement infrarouge et/ou de la lumière bleue-violette.

6. Luminaire selon l'une des revendications 1 à 5,
**caractérisé par** un dispositif de contrôle et/ou de régulation (26) destiné à régler les intensités.

7. Luminaire selon l'une des revendications 1 à 6,
**caractérisé en ce que** le luminaire (1) est conçu pour indiquer un état de fonctionnement de l'un au moins des moyens d'éclairage (2, 3).

8. Luminaire selon l'une des revendications 1 à 7,
**caractérisé en ce que** l'état de fonctionnement comprend l'intensité avec laquelle le moyen d'éclairage (2, 3) émet le rayonnement et/ou une durée d'émission, de préférence une durée d'émission à une intensité prédéterminée.

9. Luminaire selon l'une des revendications 1 à 8,
**caractérisé par** au moins un dispositif de commande, de préférence un interrupteur et/ou un régulateur à main et/ou à pied (21, 22, 23, 24, 25), destiné à modifier l'intensité.

10. Luminaire selon l'une des revendications 1 à 9,
**caractérisé par** un dispositif de surveillance qui est conçu pour détecter un défaut de fonctionnement, en particulier une défaillance de l'un des moyens d'éclairage (2, 3) ou d'autres composants du luminaire (1), et de préférence pour signaler le défaut de fonctionnement, et/ou qui est prévu pour mettre le luminaire (1) hors service en cas de détection d'un défaut de fonctionnement.

11. Procédé de fonctionnement d'un luminaire (1), en particulier pour l'inspection de surfaces de pièces, en particulier à l'aide d'un marqueur fluorescent, qui comporte au moins deux moyens d'éclairage (2, 3) qui émettent un rayonnement électromagnétique dans différentes gammes de longueurs d'onde, sachant qu'au moins dans un premier des moyens d'éclairage (2, 3), l'intensité avec laquelle le moyen d'éclairage (2, 3) rayonne est réglée au moyen d'un élément de commande (21, 22, 23, 24), et que la vitesse à laquelle l'intensité est modifiée est comprise entre 5 lux/s et 500 lux/s, et sachant que, simultanément à l'augmentation ou à la diminution de l'intensité de rayonnement du premier moyen d'éclairage, l'intensité avec laquelle un deuxième moyen d'éclairage (2, 3) rayonne
a) est maintenue constante, sachant que le luminaire (1) comporte au moins deux éléments de commande (21, 23) et que l'intensité de rayonnement du deuxième moyen d'éclairage (2, 3), déclenché par l'actionnement du premier élément de commande (21), est augmentée automatiquement jusqu'à une intensité maximale prévue et est diminuée par un nouvel actionnement, et l'intensité du premier moyen d'éclairage (2, 3) est augmentée à ladite vitesse pendant l'actionnement du deuxième élément de commande (23) et est diminuée à ladite vitesse lors du relâchement du deuxième élément de commande (23), ou
b) est diminuée ou augmentée automatiquement en sens inverse, sachant que l'intensité du premier moyen d'éclairage (2, 3) est augmentée à ladite vitesse pendant l'actionnement de l'élément de commande (22) et est diminuée à ladite vitesse lors du relâchement de l'élément de commande (22).

12. Procédé selon la revendication 11,
**caractérisé en ce que** l'intensité est réglée à une vitesse telle que l'œil humain puisse s'adapter à une modification de l'intensité pendant le réglage sans que la vision soit altérée.

13. Procédé selon la revendication 11 ou 12,
**caractérisé en ce que** le luminaire (1) comprend un élément de commande (21, 22, 23, 24) et **en ce que** l'intensité avec laquelle un premier des moyens d'éclairage (2, 3) rayonne, de préférence le moyen d'éclairage (2, 3) émettant de la lumière blanche, est augmentée ou diminuée par l'actionnement de l'élément de commande (21, 22, 23, 24), et l'intensité avec laquelle un deuxième moyen d'éclairage (2, 3) rayonne est simultanément maintenue constante ou est diminuée ou augmentée inversement au premier moyen d'éclairage (2, 3) respectif.
